# EUROPÄISCHE PATENTANMELDUNG

(11) **EP 0 776 622 A1**
(43) Veröffentlichungstag der Anmeldung: **04.06.1997**
(21) Anmeldenummer: 97100449.4
(22) Anmeldetag: 11.06.1993
(51) Int. Cl.: A47C 27/08

(54) **Verwendung von verdicktem Wasser als Füllung von Wasserbettmatratzen, Sitzkissen oder ähnlichem**

(30) Priorität: 12.06.1992 DE 4219266; 04.08.1992 DE 4225584; 05.05.1993 DE 4314749
(62) Teilanmeldung aus: 93912585.2
(71) Anmelder: LÖHNERT, Gernot, D-46499 Hamminkeln (DE); BUIL, Jürgen, D-47533 Kleve (DE); LÖHNERT, Katharina, D-46499 Hamminkeln (DE)
(72) Erfinder: LÖHNERT, Gernot, D-46499 Hamminkeln (DE); BUIL, Jürgen, D-47533 Kleve (DE); LÖHNERT, Katharina, D-46499 Hamminkeln (DE)
(74) Vertreter: Pfenning, Meinig & Partner

(57) **Zusammenfassung**

Verwendung von verdicktem Wasser als Füllung für Wasserbettmatratzen, Sitzkissen, Gelsätteln, Kühlkissen, Kühlakkus oder Kühlbeuteln, enthaltend eine Aufschlämmung von 1 bis 9 % an hochdisperser, synthetischer, bevorzugt pyrogener Kieselsäure in Wasser mit einem Zusatz an Additiven, ausgewählt aus Ethern mit Fettalkoholen, Zuckeralkoholen oder Estern mit Fettsäuren des Polyethylenglykols oder Polypropylenglykols der Molmassen > 250 bis 50.000 in Konzentrationen von 0,005 % bis 1,5 %; Polyethylenimin in Konzentrationen von > 0,003 % oder Gemischen der vorgenannten Additive.

## Beschreibung

Die vorliegende Erfindung betrifft die Verwendung eines speziellen verdicktem Wassers als Füllung für Wasserbettmatratzen, Sitzkissen, Gelsättel, Kühlkissen, Kühlakkus und Kühlbeuteln.

Diese Anmeldung ist eine Teilanmeldung aus der EP 93 91 2585.2-2111.

Verdickung von Flüssigkeiten ist in der Technik von Bedeutung, um ihr Fließverhalten zu kontrollieren, um beispielsweise bei ihrer Verwendung als Vorrats- oder Transportmittel für Wirkstoffe Verluste durch Verlaufen zu vermeiden, in ihnen enthaltene sedimentierbare Teilchen in homogener Mischung zu halten, die Flüssigkeiten zur Erzeugung von längerdauernder Wirksamkeit an Oberflächen zu fixieren oder sie in ihrem Verhalten als hydrostatische Medien zur Druckverteilung, z.B. durch Verminderung oder Ausschaltung der Wellenfortpflanzung, zu verbessern.

Wasser ist als flüssiges Medium durch seine nicht gegebene Toxizität, sein Lösevermögen, seine Verträglichkeit, Preiswürdigkeit und gute Verfügbarkeit ausgezeichnet. Dagegen sind sein schnelles unkontrolliertes Verlaufen, die Haftung von nur dünnen Wasserfilmen an Oberflächen, die rasche Sedimentierung von in ihm enthaltenen Feststoffen oder die in Wasser erfolgende starke Wellenfortpflanzung für seine technische Verwendung häufig von Nachteil. Dies trifft ebenfalls bei seiner Verwendung als Füllung für Wasserbettmatratzen zu.

Die Herstellung von verdicktem Wasser zur Erfüllung der genannten technischen Aufgaben, insbesondere in einer dauerhaften und kontrollierbaren Weise, und zur Vermeidung der Beeinträchtigung seiner vorteilhaften Eigenschaften mit nur geringen Zusatzmengen an Hilfsmitteln ist daher eine oft gestellte Forderung. Hierzu werden in der Technik unterschiedliche, die jeweils besonderen Anforderungen berücksichtigende Wege beschritten.

Organische Verdickungsmittel, wie Gelatine, Stärken oder Zellulosederivate, natürliche Polysaccharide (Gums) oder synthetische wasserlösliche Hochpolymere verändern die Eigenschaften des Wassers in für die genannten technischen Verwendungen häufig nachteiliger Weise durch Erzeugung klebender oder fädenziehender Eigenschaften oder durch schlechte Haltbarkeit (oxydativer oder mikrobieller Abbau, vgl. Kirk-Othmer' Encyclopedia of Chemical Technology, 3rd Ed., Vol. 18, S. 623).

Setzt man dagegen anorganische Verdickungsmittel, wie die kristallinen Silikate Bentonit oder Attapulgit allein als haltbare Verdickungsmittel für Wasser ein, so werden Konzentrationen von deutlich über 10 % benötigt, um technisch nutzbare Verdickungswirkungen zu erzielen, wie dies von der Verwendung von mit Bentonit oder Attapulgit verdicktem Wasser für die Waldbrandbekämpfung bekannt ist (Lit. z.B. C. E. Hardy, Chemical für Forest Fire Fighting, 3rd. Ed., Boston, 1977). Kristalline Schichtsilikate, wie der Bentonit, bilden nach dem Verdunsten des Wassers of unerwünschte, nur schwer entfernbare Rückstände.

Allen genannten Verdickungsmitteln für Wasser ist aufgrund ihres Quellungsverhaltens ein erheblicher Zeitbedarf (Stunden bis Tage) zur Erreichung der angestrebten maximalen Verdickung gemeinsam, was durch äußere Einflüsse schwierig zu kontrollieren ist und eine oft umständliche Handhabung erfordert. Durch Vergelung von unstabilisierten Kieselsolen oder durch Neutralisation von Wasserglas hergestellte Kieselgele können schon bei niedrigeren Konzentrationen Verdickungswirkung erzeugen, scheiden aufgrund der Polykondensation der durch Neutralisation entstandenen Kieselsäure aber kontinuierlich Wasser aus dem Gel ab (Synärese), wobei das Gel schrumpft. Bei Verdunsten des Wassers entstehen verhärtete Rückstände, die nur schwer von Flächen, aus Gefäßen oder Geräten, Leitungen o.ä. zu entfernen sind, so daß die Verwendung so verdickten Wassers als Füllmedium, z.B. für Wasserbettmatratzen, ausscheidet. Auch ist die Vergelung der Kieselsäure in niedrigen Konzentrationen in Wasser zeitlich schwierig kontrollierbar, selbst bei Zusatz von Hilfsstoffen wie Salzen. Hochdisperse amorphe synthetische Kieselsäure zeigt die zuletzt genannten nachteiligen Eigenschaften zwar nicht, sie findet als Verdickungsmittel aber vorwiegend für organische hydrophobe Flüssigkeiten Verwendung, weil sie in niedriger Konzentration in Wasser als Verdickungsmittel aufgrund ihrer hydrophilen Eigenschaften eine deutlich schwächere Wirkung zeigt. Dies trifft auch für andere flüssige hydrophile Medien, wie z.B. Glycerin, zu.

Es bestätigt auch R. K. Iler z.B. in "The Chemistry of Silica", Wiley, New York, 1979, S. 336, daß Dispersionen von pyrogen hergestellter Kieselsäure in wäßriger Lösung Sole bilden, welche keine starken Gele bilden und daher als anorganische Binder nur geringen Nutzen haben.

Aufgabe der vorliegenden Erfindung ist es daher, eine neuartige Füllung von Wasserbettmatratzen, Sitzkissen und ähnlichen Behältnissen vorzuschlagen, bei der die Verdickungswirkung des Wassers ohne die vorgenannten Nachteile erfolgt.

In der vorliegenden Erfindung wurde zur Lösung der Aufgabenstellung der momentanen Bereitung von haltbar verdicktem Wasser gefunden, daß aus hochdisperser synthetischer, bevorzugt aus pyrogener Kieselsäure durch Aufschlämmung in Wasser herstellbare niedrig konzentierte Kieselsole, z.B. Aufschlämmungen von 1 bis 9 %, vorzugsweise 2 bis 5 %, an pyrogener Kieselsäure in Wasser mit einem nur geringen Zusatz von bestimmten wasserlöslichen organischen Verbindungen, nämlich Ethern mit Fettalkoholen, Zuckeralkoholen, oder Estern mit Fettsäuren des Polyethylenglykols oder Polypropylenglykols der Molmassen > 250 bis 50.000 in Konzentrationen von 0,005 % bis 1,5 %, von Polyethylenglykol oder Polypropylenglykol der Molmassen > 600 bis 50.000 in Konzentrationen von 0,05 % bis 1,5 %, von Polyethylenimin in Konzentrationen von > 0,003 % als Füllung für Wasserbettmatratzen, Sitzkissen, Gelsättel, Kühlkissen, Kühlakkus oder Kühlbeutel geeignet ist. Kennzeichnend und unterschiedlich zu den erwähnten anderen Verdickungsmethoden für Wasser ist bei dieser Verdickungsweise insbesondere das ausgeprägt rheopexe Verhalten des Systems, welches sich durch Einwirkung von Schereinflüssen, wie z.B. Rühren mit einem elektrischen Rührstab (800 bis 1600 U/min), Durchgang durch Kreiselpumpen, oder bei Verspritzung durch Düsen momentan zeigt. Dabei erhöht sich die Verdickung, und es wird eine homogene und lange haltbare Verdickungswirkung erreicht. Das verdickte Wasser kann damit in dicker Schicht an Oberflächen aller Art, insbesondere an hydrophoben und heißen zur Haftung gebracht werden.

Die genannten organischen Verbindungen sind dabei in den genannten Konzentrationen allein oder auch in Kombination verwendbar. Der Einsatzbereich für Polyethylenglykol oder seiner genannten Derivate ist auf einen pH-Bereich von 1 bis 9 begrenzt. Bei höheren pH-Werten tritt Verdünnung zu einer vor ihrem Zusatz bestehenden wasserdünnen Konsistenz ein. Bei Polyethylenimin ist diese Verdünnung unterhalb eines pH-Wertes von 3 feststellbar. Durch Kombination beider Zusätze ist die Verdickung in einem entsprechend erweiterten pH-Bereich möglich. Die synthetische amorphe Kieselsäure kann auch vor der Wasserzugabe mit den genannten organischen Verbindungen trocken vermischt werden, diese Gemische bis zum Gebrauch gelagert und dann mit der zur Einstellung der notwendigen Konzentration erforderlichen Wassermenge vermischt werden. Ebenfalls ist ein direktes Vermischen der Kieselsäure und der genannten organischen Zusätze mit dem Wasser möglich.

Die so hergestellte verdickte Aufschlämmung synthetischer amorpher Kieselsäure von niedriger Konzentration in Wasser ("verdicktes Wasser") wird erfindungsgemäß als hydrostatische druckausgleichende Füllung für Wasserbettmatratzen oder von Sitzkissen oder Gelsätteln mit dem Vorteil der Ausschaltung der Wellenreflexion eingesetzt. Dabei ist auch über einen Zeitraum von mehreren Monaten in einem flexiblen Sitzkissen keine Bildung von Mikroorganismen im verdickten Wasser zu beobachten, während ein vergleichsweise mit Wasser gefülltes Kissen an den Innenwänden nach derselben Zeit schleimige Absonderungen, vermutlich durch Algenbildung, aufweist.

Das erfindungsgemäß verdickte Wasser zeigt Verträglichkeit mit darin gelösten Salzen anorganischer und organischer Säuren auch in höheren Konzentrationen (z.B. einem Zusatz von 30 % an Kaliumacetat oder Kaliumlactat), so daß eine Frostbeständigkeit (z.B. bei -30 °C) erreichbar ist. Auch Zucker oder deren hydrierte Derivate wie Sorbitol, Glykole oder Glycerin können in beliebigen Konzentrationen im verdickten Wasser gelöst werden, ohne daß die Verdickung beeinträchtigt wird. Damit kann das so verdickte Wasser ebenfalls als flüssige, wiederverwendbare Füllung für Kühlkissen, Kühlakkus oder Kühlbeutel eingesetzt werden. Aufgrund der guten Handhabungseigenschaften sind diese Mischungen bei Bedarf auch beliebig umfüllbar und damit wiederverwendbar. Dies ist mit den mit organischen Gelbildern hergestellten Füllungen dieser Art zumeist nicht möglich. Durch die haltbare Verdickung sind weiterhin die Aufnahme und die stabile Suspension von sedimentierbaren mineralischen oder organischen unlöslichen Stoffen, auch Proteinen, möglich, was für analytische, aber auch synthetisch-präparative Zwecke, wie Stofftrennung, von Nutzen ist.

Die folgenden Beispiele erläutern die Erfindung näher, ohne sie einzuschränken:

### Beispiel 1 (Herstellung eines verdickten Wassers)

2,2 l einer 15 %igen Dispersion von amorpher synthetischer Kieselsäure (Wacker HDK KD 150, Warenzeichen der Firma Wacker Chemie GmbH, Müchen) werden mit 7,8 l Wasser versetzt. Mit der dünnflüssigen Dispersion, welche eine Auslaufzeit von 10 sec. im Becher nach DIN 53 211 aufweist, werden 20 g an Polyoxyethlenlaurylether der Molmasse ca. 380 (Mulsifan CPA, Warenzeichen der Firma Zschimmer und Schwarz, Lahnstein) vermischt. Das Gemisch weist sofort nach der Zugabe eine Auslaufviskosität von 11 sec. auf. Ein Anteil von 500 ml der Mischung wird in eine Pumpsprühflasche gefüllt und auf eine senkrechte glatte Aluminiumfläche gesprüht. Durch die beim Sprühvorgang einwirkenden Kräfte verstärkt sich die Verdickung des Gemisches unmittelbar, so daß es vollstsändig auf der Metallfläche haften bleibt.

Ein weiterer Anteil von 500 ml der dünnflüssigen Mischung wird in einem Gefäß wenige Sekunden mit einem elektrischen Rührstab (Philips Elektroquirl, 800/1600 U/min, Schermesser-Durchmesser ca. 4 cm) gerührt. Dabei verdickt das Gemisch augenblicklich weiter, und es wird danach eine Auslaufviskosität von ca. 29 sec. im Auslaufbecher gemessen. (Ein geringer Teil des Gemisches läuft aus dem Konus des Bechers nicht mehr aus.)

Eine ähnlich große Verdickung läßt sich auch durch Verpumpen des Gemisches durch eine elektrische Kreiselpumpe (Fördermenge 68 l/min) erzielen. (Auslaufviskosität ca. 26 sec.)

Anstelle des Polyoxyethylenlaurylethers wurde der Versuch auch mit gleichen Resultaten durch Zugabe von Polyethylenglykol der Molmasse von ca. 4220 oder von Polyoxyethylensorbitanmonostearat der Molmasse von ca. 1200 oder von PEG-120 Jojobaalkohol und PEG-120 Jojobasäure (Molmasse ca. 5400) oder von Polyethylenimin durchgeführt. Eine Verdickungswirkung, welche sich beim Einfluß von Scherwirkung verstärkt, ist bereits bei Zusatzmengen von nur 0,05 % der genannten niedrigmolekularen Polyoxyethylenderivate, des Polyethylenglykols, des Poly(N-vinyl-2-pyrrolidons) oder nur 0,003 % des Polyethylenimins feststellbar, wobei die Viskositäten entsprechend niedriger ausfallen. Die Polyether zeigen eine Wirkungsobergrenze von ca. 1,5 %, Poly(N-vinylpyrrolidon) eine solche von ca. 1 %, bezogen auf die Gesamtmischung, oberhalb derer die Aufschlämmungen der Kieselsäure in Wasser wieder in den dünnflüssigen Ausgangszustand übergehen.

### Beispiel 2

Ein nach Beispiel 1 hergestelltes verdicktes Wasser wurde in ein 5 l fassendes Sitzkissen gefüllt, und ein anderes Kissen der gleichen Art wurde mit reinem Wasser befüllt. Die Füllung mit dem verdickten Wasser vermeidet die Wellenreflexion völlig, während bei dem nur mit Wasser befüllten Kissen ein längere Zeit anhaltendes "Wellenschaukeln" auftritt. Durch Vergleich ist auch ein deutlich verbesserter Sitzkomfort durch das Vermeiden der "Schaukelbewegungen" feststellbar. Nach einer Zeit von sechs Monaten wurden beide Kissen entleert. Bei Prüfung der Innenseite wurde im nur mit Wasser befüllten Kissen eine Bildung von schleimigen, grünlich gefärbten Belägen festgestellt, während die Innenseite des mit dem verdickten Wasser befüllten Kissens keine Veränderungen aufwies.

Eine Wasserbettmatratze des Fabrikates "Kuss" (DLM Mfg. Co, Findlay, Oh., USA, unstabilisiert) wurde mit ca. 500 l des gemäß Beispiel 1 verdickten Wassers befüllt. Allein hierdurch wird eine 100 %ige Stabilisierung der Matratze erreicht, was durch eine Reflexionszeit von < 1 sec. nach Anwendung eines Stoßimpulses am Matratzenrand zum Ausdruck kommt. Eine unstabilisierte nur mit Wasser befüllte Wasserbettmatratze zeigt dagegen eine Reflexionszeit von >> 30 sec. Es wird somit ohne die sonst bei Wasserbetten üblichen mechanischen Stabilisierungssysteme eine erhebliche Verbesserung des Liegekomforts erzielt.

## Patentansprüche

1. Verwendung von verdicktem Wasser, enthaltend
eine Aufschlämmung von 1 bis 9 % an hochdisperser synthetischer, bevorzugt pyrogener Kieselsäure in Wasser mit einem Zusatz an Additiven, ausgewählt aus Ethern mit Fettalkoholen, Zuckeralkoholen oder Estern mit Fettsäuren des Polyethylenglykols oder Polypropylenglykols der Molmassen > 250 bis 50.000 in Konzentrationen von 0,005 % bis 1,5 %; Polyethylenglykol oder Polypropylenglykol der Molmassen > 600 bis 50.000 in Konzentrationen von 0,05 % bis 1,5 %; Polyethylenimin in Konzentrationen von > 0,003 % oder Gemischen der vorgenannten Additive als Füllung von Wasserbettmatratzen, Sitzkissen, Gelsätteln, Kühlkissen, Kühlakkus oder Kühlbeuteln.
